# EUROPÄISCHE PATENTSCHRIFT

(11) **EP 2 826 583 B1**
(45) Veröffentlichungstag und Bekanntmachung des Hinweises auf die Patenterteilung: **13.06.2018**
(21) Anmeldenummer: 14176127.0
(22) Anmeldetag: 08.07.2014
(51) Int. Cl.: B23H 7/26, G01B 11/04, B23H 3/00, G01B 11/02

(54) **Optisches Messsytem zur Positionsbestimmung einer Elektrode bei der elektrochemischen Bearbeitung von Bauteilen und entsprechendes Verfahren**
Optical measuring system for determining the position of an electrode for the electrochemical processing of components and corresponding method
Système de mesure optique destiné à déterminer la position d'une électrode lors du traitement électrochimique de composants et procédé correspondant

(30) Priorität: 19.07.2013 DE 102013214228
(43) Veröffentlichungstag der Anmeldung: 21.01.2015
(73) Patentinhaber: MTU Aero Engines AG, 80995 München (DE)
(72) Erfinder: Huttner, Roland, 82287 Jesenwang (DE); Satzger, Wilhelm, 80807 München (DE)

(56) Entgegenhaltungen:
- EP-A2- 2 181 791
- DE-A1- 10 122 321
- DE-A1- 19 617 880
- DE-A1-102011 106 928
- US-A1- 2007 239 311

## Beschreibung

### HINTERGRUND DER ERFINDUNG

### GEBIET DER ERFINDUNG

Die vorliegende Erfindung betrifft eine Vorrichtung bzw. ein Verfahren zur elektrochemischen Bearbeitung von Bauteilen mit mindestens einer Elektrode und mindestens einer Elektrodenhalterung, mit der die Elektrode bewegbar gelagert ist, sodass die Elektrode bei der elektrochemischen Bearbeitung bewegt werden kann. Eine solche Vorrichtung und ein solches Verfahren sind aus DE 10 2011 106928 A1 bekannt.

### STAND DER TECHNIK

Das elektrochemische Bearbeiten von metallischen Bauteilen durch elektrochemisches Abtragen (electro chemical machining ECM) von Metall des Bauteils durch elektrochemisches Mikrofräsen (ICF), präzise elektrochemische Materialbearbeitung (PEM/PECM) bzw. Elektropolieren wird in vielen Industriebereichen eingesetzt. Bei der elektrochemischen Bearbeitung wird das Material durch anodische Oxidation in einer elektrochemischen Zelle abgetragen, bei der das Bauteil als Anode und eine Arbeitselektrode als Kathode geschaltet sind und ein geeigneter Elektrolyt zwischen Anode und Kathode angeordnet ist. Die Metallauflösung hängt ab von der Stromdichteverteilung im Elektrolyten und entsprechend vom Abstand der Elektrode vom zu bearbeitenden Bauteil. Folglich kann durch eine geeignet geformte Arbeitselektrode eine konturabhängige Auflösung des Metalls erzielt werden, sodass durch elektrochemische Bearbeitung exakte Oberflächenformen an dem zu bearbeitenden Bauteil eingestellt werden können.

Zur genauen und präzisen Bearbeitung von Oberflächen kann sowohl die Spannung, die zwischen Kathode und Anode angelegt wird, gepulst angelegt werden, als auch die Elektrode oszilliert werden, um den Abstand zwischen zu bearbeitender Oberfläche und Arbeitselektrode zu verändern, um so den Austausch des Elektrolyten im Arbeitsspalt zu erleichtern.

Um eine möglichst exakte Bearbeitung der Oberfläche des zu bearbeitenden Bauteils zu ermöglichen und insbesondere die vorgegebene Kontur des Bauteils möglichst genau und effektiv einzustellen, ist es erforderlich die elektrochemischen Bearbeitungsverfahren weiter zu verbessern.

### OFFENBARUNG DER ERFINDUNG

### AUFGABE DER ERFINDUNG

Es ist deshalb Aufgabe der vorliegenden Erfindung eine Vorrichtung sowie ein Verfahren zur elektrochemischen Bearbeitung von Bauteilen bereitzustellen, welches eine möglichst exakte und definierte Bearbeitung von metallischen Bauteilen ermöglicht, wobei die entsprechende Vorrichtung einfach aufgebaut und herzustellen sowie zu bedienen sein soll und das entsprechende Verfahren in gleicher Weise einfach durchführbar sein soll.

### TECHNISCHE LÖSUNG

Diese Aufgabe wird gelöst durch eine Vorrichtung mit den Merkmalen des Anspruchs 1 sowie ein Verfahren mit den Merkmalen des Anspruchs 9. Vorteilhafte Ausgestaltungen sind Gegenstand der abhängigen Ansprüche.

Die vorliegende Erfindung geht aus von der Feststellung, dass zur exakten elektrochemischen Bearbeitung von metallischen Bauteilen der Abstand der Bearbeitungselektrode zu der zu bearbeitenden Oberfläche möglichst exakt eingestellt werden soll. Um eine exakte Einstellung des Arbeitsabstands der Arbeitselektrode zu dem zu bearbeitenden Bauteil zu ermöglichen, wird vorgeschlagen eine Positionsmessung zur Bestimmung der Position der Elektrode mit einem optischen Messsystem einzurichten, sodass zu jeder Zeit exakte Informationen über die Position der Elektrode und somit auch über den Abstand der Elektrode von der zu bearbeitenden Metalloberfläche bekannt sind.

Die Verwendung eines optischen Messsystems ist hierfür vorteilhaft, da ein derartiges Messsystem berührungsfrei und damit verschleißfrei und ohne möglichen verfälschenden Einfluss auf die zu messende Komponente, also die Position der Elektrode, durchgeführt werden kann.

Ein derartiges optisches Messsystem umfasst eine Lichtquelle und eine Erfassungseinrichtung, wobei durch die Lichtquelle ein Lichtstrahl auf die Erfassungseinrichtung ausgesendet wird und mit der Erfassungseinrichtung die Position des auftreffenden Lichtstrahls auf der Erfassungseinrichtung ermittelt werden kann.

Bei der vorliegenden elektrochemischen Bearbeitung ist die Arbeitselektrode die bewegliche Komponente, die während der elektrochemischen Bearbeitung zur Positionierung der Arbeitselektrode gegenüber dem zu bearbeitenden Bauteil vor Beginn des elektrochemischen Abtragens bewegt wird oder während des elektrochemischen Abtragens zum Formen der Oberflächenkontur des zu bearbeitenden Bauteils nachgeführt wird. Darüber hinaus kann bei einem oszillierenden Betrieb die Elektrode auch Schwingbewegungen ausführen, um den Abstand der Arbeitselektrode von der zu bearbeitenden Oberfläche wiederholt zu verkleinern und zu vergrößern. Alle diese Bewegungen lassen sich durch ein optisches Messsystem zur Bestimmung der Position der Elektrode überwachen, also sowohl die anfängliche Positionierung der Elektrode gegenüber einem zu bearbeitenden Bauteil als auch die Nachführbewegung der Elektrode beim elektrochemischen Abtragen, wobei dieser Vorgang auch als Senken bezeichnet wird. Darüber hinaus kann eine Oszillationsbewegung der Elektrode während der chemischen Bearbeitung verfolgt und überwacht werden. Gemäß der Erfindung sind sowohl die Lichtquelle als auch die Erfassungseinrichtung ortsfest an einem Träger angeordnet, um zu vermeiden, dass die entsprechende elektronische Komponente, wie die Lichtquelle oder die Erfassungseinrichtung, aufwändig auf einem bewegbaren Teil angeordnet werden müssen. Außerdem hat die ortsfeste Lagerung der Lichtquelle und der Erfassungseinrichtung den Vorteil, dass die entsprechenden elektrischen Komponenten, die sehr empfindlich sein können, nicht einer ständigen Bewegung ausgesetzt sind. Hierbei ist an der beweglichen Komponente, deren Position bestimmt werden soll, wie im vorliegenden Fall der Arbeitselektrode oder der Elektrodenhalterung eine Umlenkoptik angeordnet, die den Lichtstrahl der Lichtquelle auf die Erfassungseinrichtung umlenkt, sodass der Lichtstrahl zunächst von der Lichtquelle am ortsfesten Träger ausgesandt, durch die Umlenkoptik an der beweglichen Elektrode bzw. der beweglichen Elektrodenhalterung umgelenkt bzw. reflektiert wird, um anschließend in der ortsfesten Erfassungseinrichtung erfasst zu werden, wo wiederum der Auftreffort des Lichtstrahls zur Positionsbestimmung der beweglichen Elektrode oder der beweglichen Elektrodenhalterung Verwendung findet. Entsprechend muss die Umlenkoptik eine positionsgetreue Reflexion bzw. Umlenkung des von der Lichtquelle auftreffenden Lichtstrahls zur Erfassungseinrichtung bewirken. Hierzu wird ein sogenannter Retroreflektor eingesetzt, welcher den auftreffenden Lichtstrahl parallel zum auftreffenden Lichtstrahl und lediglich parallel versetzt zum auftreffenden Lichtstrahl reflektiert. Ein derartiger Retroreflektor kann durch einen Tripelspiegel, ein Tripelprisma oder ein Porroprisma gebildet sein.

Die Erfassungseinrichtung kann einen positionsempfindlichen Sensor wie einen PSD - (position sensitive device) Sensor oder einen CCD - (charge coupled device) Sensor umfassen. Mit diesen Sensoren ist eine Bestimmung der Auftreffposition des auftreffenden Lichtstrahl auf dem Sensor möglich, wobei die ermittelten Messsignale in einer entsprechend eingerichteten elektronischen Datenverarbeitungsanlage automatisch verarbeitet und ausgewertet werden können.

Die optische Messeinrichtung kann als Lichtquelle einen Laser umfassen, der einen exakt definierten Lichtstrahl erzeugt. Darüber hinaus kann eine Fokussieroptik, wie beispielsweise eine Fokussierlinse eingesetzt werden, um den Lichtstrahl weiter zu fokussieren. Vor der Erfassungseinrichtung kann eine Filtereinrichtung vorgesehen sein, um unerwünschte Störsignale zu vermeiden.

Zum Schutz der empfindlichen elektronischen Geräte, wie der Lichtquelle oder der Sensoren der Erfassungseinrichtung, kann die optische Messeinrichtung mit einer Schutzhülle, wie beispielsweise einem Faltenbalg versehen sein oder es kann ein Sperrluftsystem angeordnet sein, welches durch Erzeugen eines Sperrluftstroms das Eindringen von unerwünschten Fremdstoffen, wie beispielsweise Dämpfe des Elektrolyten und dergleichen verhindert.

Die Elektrode ist so gelagert, dass die Elektrode eine zweidimensionale Bewegung durchführt, wobei allerdings auch dreidimensionale Bewegungen, also Bewegungen in drei unabhängigen Raumrichtungen möglich sein können. Insgesamt kann die Bewegung der Elektrode bis zu sechs Bewegungsfreiheitsgrade umfassen. Entsprechend ist auch das optische Messsystem so hergerichtet, dass es eine zweidimensionale oder dreidimensionale Bewegung der Elektrode erfasst. Insbesondere kann das optische Messsystem mehrere der oben beschriebenen Komponenten wie Lichtquellen und Erfassungseinrichtungen aufweisen oder es können mehrere optische Messsysteme so angeordnet sein, dass sämtliche Bewegungen der Elektrode erfassbar sind, beispielsweise indem zwei optische Messsysteme gedreht um 90° zueinander angeordnet sind.

Mit dem optischen Messsystem kann die Position der beweglichen Elektrode ständig während und/oder vor und/oder nach der Bearbeitung erfasst werden, insbesondere auch bei einem oszillierenden Betrieb, also wenn die Elektrode oszillierend bewegt wird. Insbesondere können durch das optische Messsystem hohe Abtastraten im Bereich von 500 Hz bis 1 kHz realisiert werden, sodass mechanische Oszillationen der Elektrode im Bereich von 20 bis 50 Hz erfasst werden können. Die Position der Elektrode kann hierbei auf 5 µm, insbesondere 1 µm und vorzugsweise 0,5 µm genau bestimmt werden, wobei Bewegungen im Bereich von mehreren Millimetern erfasst werden können.

### KURZBESCHREIBUNG DER FIGUREN

Die beigefügten Zeichnungen zeigen in rein schematischer Weise in
- Fig. 1: eine Darstellung einer Elektrodenhalterung zur beweglichen Halterung einer Elektrode;
- Fig. 2: eine Darstellung einer erfindungsgemäßen Elektrodenhalterung mit einem optischen Messsystem zur Positionsbestimmung der Elektrode;
- Fig. 3: eine Ansicht der Elektrodenhalterung aus Fig. 2 um 90° gedreht;
- Fig. 4: eine Darstellung des optischen Messsystems; und in
- Fig. 5: in den Teilbildern a) und b) eine Darstellung eines Tripelprismas und eines Porroprismas.

### AUSFÜHRUNGSBEISPIELE

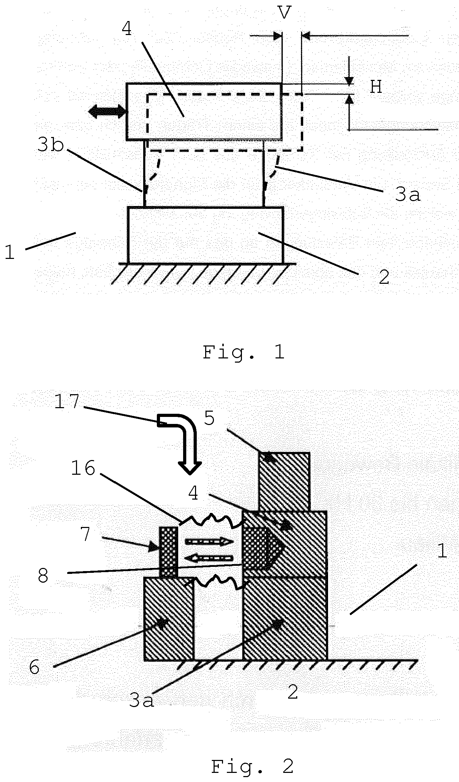

Die Fig. 1 zeigt eine rein schematische Darstellung einer Elektrodenhalterung 1 zur beweglichen Lagerung einer Elektrode mit einer feststehenden Basis 2 und einer an biegbaren Blechen 3a,3b angeordnete Parallelschwinge 4, die sich gemäß dem Doppelpfeil hin und her bewegen kann und die in einer ersten Raumrichtung eine Verschiebung V ausführt und gleichzeitig eine Höhenänderung H in einer zur ersten Raumrichtung quer stehenden Raumrichtung verursacht, sodass eine an der Parallelschwinge 4 angeordnete Elektrode eine zweidimensionale Bewegung in zwei unabhängigen Raumrichtungen ausführt, wie durch die gestrichelte Darstellung gezeigt ist. Obwohl in der Fig. 1 die Bewegung der Parallelschwinge 4 als eine kombinierte Bewegung in den beiden unabhängigen Raumrichtungen dargestellt ist, kann eine entsprechende Elektrodenhalterung auch so ausgeführt sein, dass die Elektrodenhalterung unabhängige Bewegungen in den beiden unabhängigen Raumrichtungen ausführen kann, sodass beliebige zweidimensionale Bewegungen durchgeführt werden können.

Die Fig. 2 zeigt die Elektrodenhalterung aus Fig. 1 in einer Seitenansicht mit einer Bearbeitungselektrode 5 und dem erfindungsgemäßen optischen Messsystem zur Bestimmung der Position der Bearbeitungselektrode 5. Die Bearbeitungselektrode 5 ist auf der Parallelschwinge 4 und über die bewegliche Halterung 3a an der Basis 2 angeordnet. Beabstandet von der beweglichen Halterung 3a und entkoppelt von der Bewegung der beweglichen Halterung 3a ist ein Sockel 6 vorgesehen, auf welchem eine Lichtquellen - und Erfassungseinrichtungseinheit 7 angeordnet ist, die berührungslos mit einem Tripelspiegel 8 zusammenwirkt, der an der Parallelschwinge 4 angeordnet ist. Die Lichtquellen - und Erfassungseinrichtungseinheit 7 des optischen Messsystems umfasst einen Laser, welcher gemäß den Pfeilen in Fig. 2 einen Laserstrahl in Richtung des Tripelspiegels 8 aussendet, wobei der Laserstrahl am Tripelspiegel 8 parallel versetzt reflektiert wird und von einem Sensor der Lichtquellen - und Erfassungseinrichtungseinheit 7 erfasst wird. Bei dem Sensor handelt es sich um einen positionssensitiven Sensor, wie sogenannte PSD (positioning sensitive device) - oder CCD (CCD charge coupled device) - Sensoren. Durch den positionssensitiven Sensor kann die Position des vom Tripelspiegel 8 reflektierten Laserstrahls ermittelt werden, die wiederum von der Position des Tripelspiegels 8 und somit von der Position der Parallelschwinge 4 sowie der Bearbeitungselektrode 5 abhängt, da der Tripelspiegel 8 als sogenannter Retroreflektor eine positionsgetreue Reflexion des von dem Laser ausgestrahlten Laserstrahls bewirkt.

Um eine Verschmutzung des optischen Messsystems bzw. seiner Komponenten zu vermeiden, ist ein Faltenbalg 16 vorgesehen, der den Zwischenraum zwischen Lichtquelle, Sensoren und Umlenkoptik abschließt. Zusätzlich oder alternativ kann ein Sperrluftsystem mit einem gemäß dem Pfeil 17 zugeführten Strom an Luft oder sonstigen geeigneten Gasen aufgebaut werden, welches das Eindringen von Verschmutzungen und Verunreinigungen verhindern kann.

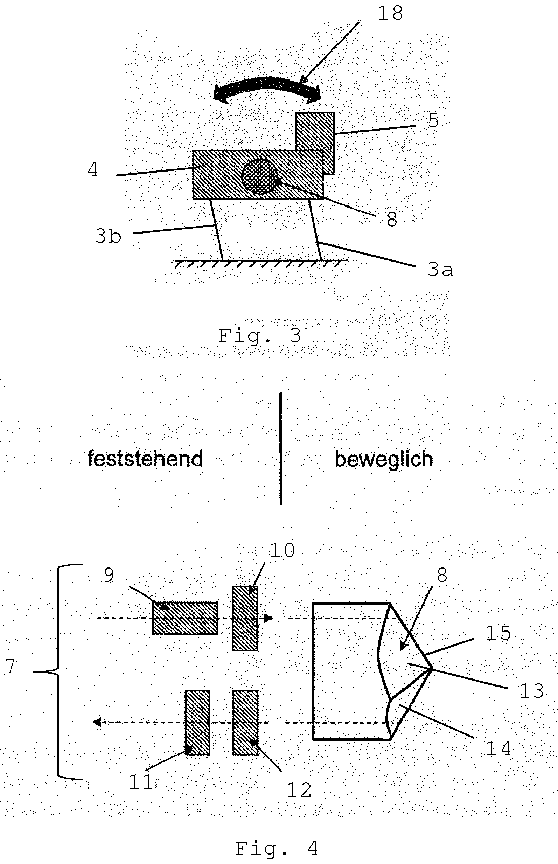

Die Fig. 3 zeigt eine um 90° gedrehte Ansicht der Elektrodenhalterung mit der Parallelschwinge 4, der Elektrode 5, dem Tripelspiegel 8 in der Parallelschwinge 4 und den beweglichen Halterungen 3a, 3b die beispielsweise durch biegbare Bleche gebildet sein können.

Wie durch den Doppelpfeil 18 der Fig. 3 angezeigt ist, kann sich die Elektrode 5 mit der Parallelschwinge 4 entlang einer bogenförmigen Linie zweidimensional hin und herbewegen, wobei der in der Parallelschwinge 4 angebrachte Tripelspiegel 8 eine identische Bewegung ausführt. Da der von dem Tripelspiegel 8 reflektierte Laserstrahl der Position des Tripelspiegels bzw. der Parallel schwinge 4 und somit der Elektrode 5 entspricht, kann durch Ermittlung der Position des Laserstrahls durch einen positionsempfindlichen Sensor, wie beispielsweise einen PSD - oder CCD - Sensor die exakte Lage bzw. Position der Elektrode 5 bestimmt werden.

Für eine vollautomatische Auswertung der Sensorsignale, kann der Sensor über einen Messverstärker und sonstige erforderliche elektronische Zusatzkomponenten, insbesondere über konventionelle Schnittstellen, wie beispielsweise USB-Schnittstellen, mit einem Computer verbunden sein, auf den für die Auswertung der Sensorsignale geeignete Software zum Einsatz kommt. Über die elektronische Datenverarbeitungsanlage können entsprechende Messsignale auch gespeichert und hinsichtlich zeitlicher Änderungen ausgewertet werden. Damit ist auch eine Langzeitkontrolle der Anlage möglich.

Anstelle nur eines optischen Messsystems 7, 8 für eine bewegliche Elektrodenhalterung 1 können auch mehrere optische Messsysteme bzw. mehrere Lichtquellen wie Laser, optische Umlenkeinheiten, wie Tripelspiegel, und Sensoren an einer Elektrodenhalterung 1 vorgesehen werden, um beispielsweise mittels einer zweiten optischen Messeinheit zweidimensionale Bewegungen quer, insbesondere senkrecht zu der ersten zweidimensionalen Bewegung erfasst zu können. Beispielsweise könnte bei der Elektrodenhalterung 1, wie sie in der Fig. 2 gezeigt ist, ein weiterer Tripelspiegel 8 zur Reflexion eines Laserstrahls, der sich senkrecht zur Blattebene erstreckt, vorgesehen sein, um Bewegungen der Bearbeitungselektrode 5 in der Darstellung der Fig. 2 nach links oder rechts bzw. nach oben und unten erfassen zu können.

Die Fig. 4 verdeutlicht das optische Messsystem mit der Lichtquellen - und Erfassungseinrichtungseinheit 7 sowie dem Tripelspiegel 8. Die Lichtquellen - und Erfassungseinrichtungseinheit 7 umfasst einen Laser 9, dem eine Fokussierlinse 10 vorgeschaltet ist. Der fokussierte Laserstrahl trifft auf den Tripelspiegel 8, wo der Laserstrahl parallel versetzt reflektiert wird um über einen Filter 12 auf einen positionsempfindlichen Sensor 11, wie beispielsweise einen PSD - oder CCD - Sensor zu treffen. Der Filter 12 dient zur Unterdrückung von Rauscheffekten bzw. zum Herausfiltern störender Lichtsignale.

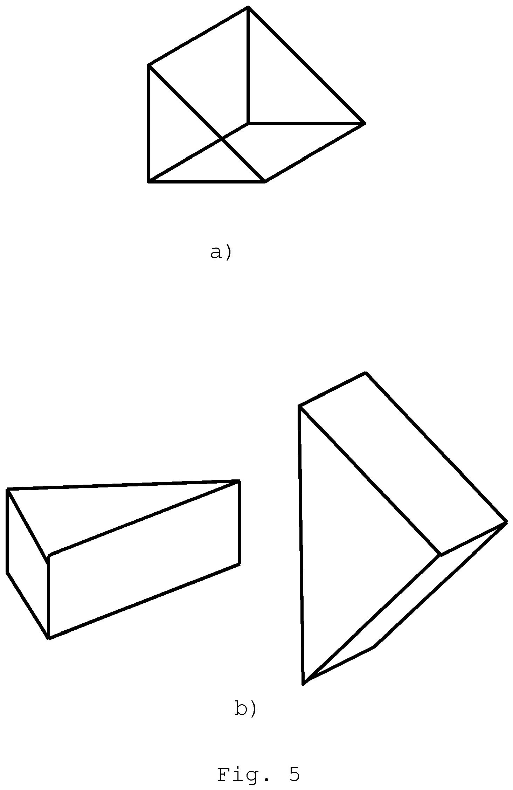

Der Tripelspiegel 8 weist drei senkrecht zueinander stehende Spiegelflächen 13, 14, 15 auf, die für eine Retroreflexion mit einem zum einfallenden Laserstrahl parallel versetzten Reflexionsstrahl sorgen, sodass die Lichtquelle in Form des Lasers 9 und der Sensor 11 separat von der beweglichen Elektrodenhalterung an einem ortsfesten Sockel angeordnet sein können, um eine berührungslose Positionsbestimmung mittels des optischen Messsystems zu ermöglichen. Statt des Tripelspiegels 8 können auch ein Tripelprisma oder ein Porroprisma eingesetzt werden, wie sie in der Fig. 5 in den Teilbildern a) und b) dargestellt sind.

Obwohl die vorliegende Erfindung anhand der beigefügten Ausführungsbeispiele detailliert beschrieben worden ist, ist für den Fachmann selbstverständlich, dass die Erfindung nicht auf diese Ausführungsbeispiele beschränkt ist, sondern dass Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird.

## Patentansprüche

1. Vorrichtung zur elektrochemischen Bearbeitung von Bauteilen mit mindestens einer Elektrode (5) und mindestens einer Elektrodenhalterung (1, 2 ,3a ,3b ,4), mit der die Elektrode (5) bewegbar gelagert ist, wobei die Vorrichtung mindestens ein optisches Messsystem (7, 8) zur Bestimmung der Position der Elektrode (5) umfasst, und das optische Messsystem mindestens eine Lichtquelle (9) und eine Erfassungseinrichtung (11) enthält,
dadurch gekennzeichent, dass
die Elektrodenhalterung (1, 2, 3a, 3b, 4) eine zwei-dimensionale und/oder dreidimensionale Bewegung der Elektrode ermöglicht, dass das optische Messsystem (7, 8) eine zwei-dimensionale und/oder dreidimensionale Bewegung der Elektrode (5) erfasst, und dass das optische Messsystem mindestens eine einen Retroreflektor enthaltende Umlenkoptik (8) enthält, die das Licht der Lichtquelle (9) positionsgetreu auf die Erfassungseinrichtung (11) umlenkt, wobei die Umlenkoptik (8) an der Elektrodenhalterung (1, 2, 3a, 3b, 4) oder der Elektrode (5) angeordnet ist und die Lichtquelle (9) und Erfassungseinrichtung (11) an mindestens einem ortsfesten Träger (6) angeordnet sind.

2. Vorrichtung nach Anspruch 1,
**dadurch gekennzeichnet, dass**
die Lichtquelle (9) oder die Erfassungseinrichtung (11) an der Elektrode oder der Elektrodenhalterung (1, 2 ,3a ,3b ,4) angeordnet sind.

3. Vorrichtung nach Anspruch 1,
**dadurch gekennzeichnet, dass**
die Lichtquelle (9) oder die Erfassungseinrichtung (11) an einem ortsfesten Träger (6) angeordnet sind.

4. Vorrichtung nach einem der Ansprüche 1 bis 3,
**dadurch gekennzeichnet, dass**
der Retroreflektor der Umlenkoptik (8) einen Tripelspiegel, ein Tripelprisma oder ein Porroprisma umfasst.

5. Vorrichtung nach einem der Ansprüche 1 bis 4,
**dadurch gekennzeichnet, dass**
die Erfassungseinrichtung (11) einen positionsempfindlichen Sensor (PSD (position sensitive device) - Sensor) oder einen CCD - Sensor (CCD charge coupled device) umfasst.

6. Vorrichtung nach einem der vorhergehenden Ansprüche,
**dadurch gekennzeichnet, dass**
die optische Messeinrichtung eine Schutzhülle, insbesondere einen Faltenbalg (16) und/oder ein Sperrluftsystem (17) umfasst.

7. Vorrichtung nach einem der vorhergehenden Ansprüche,
**dadurch gekennzeichnet, dass**
die optische Messeinrichtung eine Lichtquelle (9) in Form eines Lasers (9) und/ oder eine Fokussieroptik (10) und/ oder eine Filtereinrichtung (12) umfasst.

8. Vorrichtung nach einem der vorhergehenden Ansprüche zur Verwendung in einem Verfahren zur elektrochemischen Bearbeitung von Bauteilen.

9. Verfahren zur elektrochemischen Bearbeitung von Bauteilen mit einer Vorrichtung nach einem der vorhergehenden Ansprüche, wobei
- die Elektrode (5) während der elektrochemischen Bearbeitung bewegt, insbesondere oszillierend bewegt wird,
- die Position der Elektrode (5) mittels eines optischen Messsystems (7, 8) ständig während der Bearbeitung und/oder vor und/oder nach der Bearbeitung auf 5 µm, insbesondere 1 µm, vorzugsweise 0,5 µm genau erfasst wird
wobei die elektrochemische Bearbeitung optional gepulst erfolgt.

## Claims

1. Device for electrochemical processing of components, comprising at least one electrode (5) and at least one electrode holder (1, 2, 3a, 3b, 4) by means of which the electrode (5) is movably mounted, the device comprising at least one optical measuring system (7, 8) for determining the position of the electrode (5), and the optical measuring system containing at least one light source (9) and a detection means (11), **characterized in that** the electrode holder (1, 2, 3a, 3b, 4) allows a two-dimensional and/or three-dimensional movement of the electrode, **in that** the optical measuring system (7, 8) detects a two-dimensional and/or three-dimensional movement of the electrode (5), and **in that** the optical measuring system contains at least one deflection optics (8) that contains a retroreflector and deflects the light from the light source (9) to the detection means (11) in a precisely positioned manner, the deflection optics (8) being arranged on the electrode holder (1, 2, 3a, 3b, 4) or on the electrode (5), and the light source (9) and the detection means (11) being arranged on at least one stationary support (6).

2. Device according to claim 1, **characterized in that** the light source (9) or the detection means (11) are arranged on the electrode or on the electrode holder (1, 2, 3a, 3b, 4).

3. Device according to claim 1, **characterized in that** the light source (9) or the detection means (11) are arranged on a stationary support (6).

4. Device according to any of claims 1 to 3, **characterized in that** the retroreflector of the deflection optics (8) comprises a triple mirror, a triple prism or a porro prism.

5. Device according to any of claims 1 to 4, **characterized in that** the detection means (11) comprises a position-sensitive (PSD - position sensitive device) sensor or a CCD (charge coupled device) sensor.

6. Device according to any of the preceding claims, **characterized in that** the optical measuring means comprises a protective cover, in particular a bellows (16) and/or a blocking air system (17).

7. Device according to any of the preceding claims, **characterized in that** the optical measuring means comprises a light source (9) in the form of a laser (9) and/or focusing optics (10) and/or a filter arrangement (12).

8. Device according to any of the preceding claims for use in a method for electrochemical processing of components.

9. Method for electrochemical processing of components using a device according to any of the preceding claims, wherein
- the electrode (5) is moved, in particular moved in an oscillating manner, during the electrochemical processing,
- the position of the electrode (5) is detected continuously during the processing and/or before and/or after the processing, to a degree of precision of 5 µm, in particular 1 µm, preferably 0.5 µm, by means of an optical measuring system (7, 8),
wherein the electrochemical processing is optionally carried out in a pulsed manner.

## Revendications

1. Dispositif de traitement électrochimique de composants avec au moins une électrode (5) et au moins un support d'électrode (1, 2, 3a, 3b, 4) avec lequel l'électrode (5) est montée de manière mobile, le dispositif comprenant au moins un système de mesure optique (7, 8) destiné à déterminer la position de l'électrode (5), et le système de mesure optique contient au moins une source de lumière (9) et un dispositif de détection (11), **caractérisé en ce que** le support d'électrode (1, 2, 3a, 3b, 4) permet un mouvement bidimensionnel et/ou tridimensionnel de l'électrode, que le système de mesure optique (7, 8) détecte un mouvement bidimensionnel et/ou tridimensionnel de l'électrode (5), et que le système de mesure optique contient au moins une optique de déviation (8) contenant un rétroréflecteur qui dévie correctement la lumière de la source de lumière (9) sur le dispositif de détection (11), l'optique de déviation (8) étant disposée sur le support d'électrode (1, 2, 3a, 3b, 4) ou sur l'électrode (5) et la source de lumière (9) et le dispositif de détection (11) étant disposés sur au moins un support stationnaire (6).

2. Dispositif selon la revendication 1, **caractérisé en ce que**
la source de lumière (9) ou le dispositif de détection (11) sont disposés sur l'électrode ou sur le support d'électrode (1, 2, 3a, 3b, 4).

3. Dispositif selon la revendication 1, **caractérisé en ce que**
la source de lumière (9) ou le dispositif de détection (11) sont disposés sur un support fixe (6).

4. Dispositif selon l'une des revendications 1 à 3, **caractérisé en ce que**
le rétroréflecteur de l'optique de déviation (8) comprend un miroir en trièdre, un prisme en trièdre ou un prisme de Porro.

5. Dispositif selon l'une des revendications 1 à 4, **caractérisé en ce que**
le dispositif de détection (11) comprend un capteur sensible à la position (PSD - Position Sensitive Device) ou un capteur CCD (Charge Coupled Device - dispositif à couplage de charge).

6. Dispositif selon l'une des revendications précédentes, **caractérisé en ce que**
le dispositif de mesure optique comprend un couvercle de protection, en particulier un soufflet (16) et/ou un système de purge d'air (17).

7. Dispositif selon l'une des revendications précédentes, **caractérisé en ce que**
le dispositif de mesure optique comprend une source de lumière (9) sous la forme d'un laser (9) et/ou d'une optique de focalisation (10) et/ou d'un dispositif de filtrage (12).

8. Dispositif selon l'une des revendications précédentes destiné à être utilisé dans un procédé de traitement électrochimique de composants.

9. Procédé de traitement électrochimique de composants avec un dispositif selon l'une des revendications précédentes, dans lequel
- l'électrode (5) se déplace lors du traitement électrochimique, en particulier est déplacée de manière oscillante,
- la position de l'électrode (5) est constamment détectée au moyen d'un système de mesure optique (7, 8) lors du traitement et/ou avant et/ou après le traitement à une précision de 5 µm, en particulier de 1 µm, de préférence de 0,5 µm
le traitement électrochimique s'effectuant de manière facultative par pulsions.
